# EUROPÄISCHE PATENTANMELDUNG

(11) **EP 0 814 105 A2**
(43) Veröffentlichungstag der Anmeldung: **29.12.1997**
(21) Anmeldenummer: 97109910.6
(22) Anmeldetag: 18.06.1997
(51) Int. Cl.: C08G 18/08, C08G 18/42, C08G 18/77

(54) **Wässrige Dispersion von silanfunktionellen Polyurethanharzen, Überzugsmittel und deren Verwendung**

(30) Priorität: 22.06.1996 DE 19624972
(71) Anmelder: Herberts Gesellschaft mit beschränkter Haftung, 42285 Wuppertal (DE)
(72) Erfinder: Vogt-Birnbrich, Bettina, Dr., 42719 Solingen (DE); Göbel, Armin, 58300 Wetter (DE); Collong, Wilfried, Dr., 42929 Wermelskirchen (DE); Kleuser, Birgit, 42369 Wuppertal (DE)
(74) Vertreter: Türk, Gille, Hrabal, Leifert

(57) **Zusammenfassung**

Wäßrige Dispersion von silanfunktionellen Polyurethanharzen mit einem Zahlenmittel der Molmasse von 10000 bis 500000 und einem Siliziumgehalt von 1 bis 30 mmol pro 100 g Harzfestkörper, erhältlich durch Umsetzung von
(A) NCO-Gruppen enthaltenden Addukten, erhältlich aus
   a) Verbindungen mit mindestens einer ionischen oder zur Ionenbildung fähigen und/oder hydrophilen nicht-ionischen Gruppe und mehr als einer mit Isocyanat reaktionsfähigen Gruppe mit
   b) organischen Diisocyanaten,
(B) mit Polyestern mit einer OH-Zahl von 150 bis 300 mg KOH/g und mehr als drei OH-Gruppen pro Molekül, erhältlich aus
   c) Polyalkoholen,
   d) Polycarbonsäuren und
   e) Monofettsäuren
(C) gegebenenfalls mit linearen Polyestern mit einer OH-Zahl von 40 bis unter 150 mg KOH/g, die frei von Monofettsäuren sind, und
(D) mit organischen Polyisocyanaten, wobei zumindest ein Teil der Polyisocyanate mindestens eine funktionelle Gruppe R¹OSi〈̶ aufweist worin
   R¹ = C₁ bis C₈-Alkyl oder -C(O)R² und R² = C₁ bis C₁₀-Alkyl bedeuten,
   und Überführung des Reaktionsproduktes in eine wäßrige Dispersion.

## Beschreibung

Die Erfindung betrifft wäßrige Polyurethandispersionen, welche insbesondere geeignet sind als hydroxyfunktionelle Komponente in isocyanatvernetzenden Bindemittelsystemen. Die Erfindung betrifft außerdem diese Polyurethandispersionen enthaltende wäßrige Überzugsmittel und deren Verwendung zur Herstellung von Mehrschichtüberzügen auf dem Gebiet der Fahrzeug- und Industrielackierung.

Es ist eine Vielzahl wasserverdünnbarer verschiedenartig kettenverlängerter Polyurethandispersionen bekannt, welche auf Grund ihrer hervorragenden Eigenschaften unter anderem als Bindemittel in Wasserbasislacken eingesetzt werden. Entsprechend modifizierte wasserverdünnbare Polyurethandispersionen werden jedoch auch als hydroxyfunktionelle Komponente in isocyanatvernetzenden Zweikomponenten (2K)-Klar- oder Decklacken eingesetzt. Insbesondere isocyanatvernetzende 2K-Systeme auf Basis wasserverdünnbarer Polyurethandispersionen genügen jedoch noch nicht in allen Eigenschaften den Anforderungen an einen Mehrschichtaufbau, insbesondere in der Fahrzeuglackierung.

So werden beispielsweise in den WO-A-94/03511 und WO-A-94/03512 wäßrige Überzugsmittel auf Basis von Polyisocyanaten und wasserverdünnbaren OH-funktionellen Polyurethanharzen beschrieben. Die Polyurethanharze werden erhalten durch getrennte Herstellung eines NCO-funktionellen Preadduktes aus organischer Säure mit isocyanatreaktiven Gruppen und Diisocyanaten sowie eines OH-funktionellen Prekondensates und anschließende Umsetzung der beiden Komponenten. Nachteile dieser 2K-Systeme sind ihre ungenügende Ablaufsicherheit sowie mangelnde Chemikalien- und Benzinbeständigkeit.

In der DE-A-44 13 562 werden wäßrige Polyurethandispersionen mit einem Gehalt von 2 bis 150 mmol Siloxanbrücken pro 100 g Festharz beschrieben. Die Polyurethandispersionen werden erhalten durch Kettenverlängerung eines Polyurethanprepolymeren mit Siloxangruppen durch Hydrolyse. Das Polyurethanprepolymer wird erhalten, indem ein NCO-funktionelles Polyurethanprepolymer mit Aminosilanen umgesetzt wird. Die Polyurethandispersionen finden Anwendung in wäßrigen Überzugsmitteln als alleiniges Bindemittel oder in Kombination mit blockierten Polyisocyanaten oder Formaldehydkondensationsharzen als Vernetzer. 2K-Überzugsmittel auf Basis der beschriebenen Polyurethandispersionen und auf Basis von nicht-blockierten Polyisocyanaten sind verbesserungsbedürftig hinsichtlich Ablaufsicherheit und Blasenbildung, insbesondere bei höheren Schichtdicken.

Aufgabe der vorliegenden Erfindung ist die Bereitstellung von wäßrigen Polyurethandispersionen, die als Bindemittelkomponente in isocyanatvernetzenden zweikomponentigen (2K) Systemen zu Überzugsmitteln mit hoher Ablaufsicherheit, Blasenfreiheit auch bei höheren Schichtdicken sowie guter Chemikalien-, Benzin- und Feuchtraumbeständigkeit führen.

Die Aufgabe wird gelöst durch Bereitstellung von wäßrigen Dispersionen eines oder mehrerer durch Silangruppen modifizierter Polyurethanharze mit einem Zahlenmittel der Molmasse (Mn) von 10000 bis 500000 und einem Siliziumgehalt, berechnet als elementares Silizium, von 1 bis 30 mmol pro 100 g Harzfestkörper, wobei die wäßrigen Polyurethandispersionen erhältlich sind durch Umsetzung von
(A) NCO-Gruppen enthaltenden Addukten, welche erhältlich sind durch Umsetzung von
   a) einer oder mehreren Verbindungen mit mindestens einer ionischen oder zur Ionenbildung fähigen und/oder hydrophilen nicht-ionischen Gruppe und mehr als einer, bevorzugt zwei, mit Isocyanat reaktionsfähigen Gruppen mit
   b) einem oder mehreren organischen Diisocyanaten,
(B) mit einem oder mehreren Polyestern mit einer OH-Zahl von 150 bis 300 mg KOH/g und mehr als drei OH-Gruppen pro Molekül, welche erhältlich sind durch Reaktion von
   c) einem oder mehreren Polyalkoholen, mit
   d) einer oder mehreren Polycarbonsäuren und
   e) einer oder mehreren Monofettsäuren
(C) gegebenenfalls mit einem oder mehreren linearen Polyestern mit einer OH-Zahl von 40 bis unter 150 mg KOH/g, die frei von Monofettsäuren sind, und
(D) mit einem oder mehreren organischen Polyisocyanaten, wobei zumindest ein Teil der Polyisocyanate mindestens eine funktionelle Gruppe R₁OSi〈̶ aufweist und gegebenenfalls mit einem oder mehreren Monoisocyanaten mit mindestens einer funktionellen Gruppe R¹OSi〈̶, worin
   R¹ = C₁ bis C₈-Alkyl oder -C(O)R² und
   R² = C₁ bis C₁₀-Alkyl bedeuten,
   und Überführung des gegebenenfalls neutralisierten Reaktionsproduktes in eine wäßrige Dispersion unter Zusatz von Wasser.

Bevorzugt enthalten die erfindungsgemäßen Dispersionen 15 bis 30 Gew.-%, besonders bevorzugt 15 bis 25 Gew.-% der Komponente (A), 30 bis 80 Gew.-%, besonders bevorzugt 50 bis 80 Gew.-% der Komponente (B), 0 bis 40 Gew.-%, besonders bevorzugt 0 bis 20 Gew.-% der Komponente (C) und 4 bis 40 Gew.-%, besonders bevorzugt 5 bis 15 Gew.-% der Komponente (D); dabei beziehen sich die Gew.-% von (A), (B), (C) und (D) jeweils auf das Festkörpergewicht und addieren sich auf 100 Gew.-%.

Die erfindungsgemäßen Polyurethanharze haben bevorzugt ein zahlenmittleres Molekulargewicht (Mn) von 15000 bis 100000. Ihr Siliziumgehalt, berechnet als elementares Silizium, beträgt bevorzugt von 2 bis 20, besonders bevorzugt von 3 bis 15 mmol pro 100 g Harzfestkörper. Ihre OH-Zahl liegt bevorzugt bei 30 bis 200 mg KOH/g, besonders bevorzugt bei 50 bis 120 mg KOH/g.
Zur Herstellung der erfindungsgemäßen wäßrigen Polyurethandispersionen werden NCO-Gruppen enthaltende Addukte (A) eingesetzt. Bei der Herstellung der NCO-Gruppen enthaltenden Addukte (A) kommen als Komponente a) beispielsweise niedermolekulare Verbindungen in Frage, die mehr als eine, bevorzugt zwei, mit Isocyanat reaktionsfähige Gruppen und mindestens eine ionische Gruppe, zur Ionenbildung befähigte Gruppe und/oder hydrophile nicht-ionische Gruppe enthalten. Zur Ionenbildung befähigte Gruppen sind funktionelle Gruppen, wie saure und basische Gruppen, die durch Neutralisation mit Basen oder Säuren in ionische Gruppen überführt werden. Bevorzugt sind anionische oder zur Anionenbildung befähigte Gruppen. Als saure zur Anionenbildung befähigte Gruppen kommen z.B. Carboxyl-, Phosphorsäure- und Sulfonsäuregruppen in Betracht. Bevorzugt sind Carboxylgruppen. Als basische in Kationen überführbare Gruppen kommen beispielsweise primäre, sekundäre und tertiäre Aminogruppen und als kationische Gruppen Oniumgruppen, wie quartäre Ammonium-, Phosphonium- und/oder tertiäre Sulfoniumgruppen in Betracht. Geeignete mit Isocyanat reaktionsfähige Gruppen sind insbesondere Hydroxylgruppen und primäre und sekundäre Aminogruppen.
Bevorzugte als Komponente a) in Frage kommende Verbindungen sind solche, die Carboxyl- und Hydroxylgruppen enthalten. Beispiele für solche Verbindungen sind Hydroxyalkancarbonsäuren insbesondere der folgenden allgemeinen Formel:

(HO)ₓQ(COOH)_{y}

worin
Q einen geraden oder verzweigten Alkylenrest mit 1 bis 12 C-Atomen darstellt und x und y jeweils 1, 2 oder 3 bedeuten. Beispiele hierfür sind Zitronensäure und Weinsäure. Bevorzugt sind solche Carbonsäuren, worin x = 2 und x = 1 sind, nämlich Dihydroxyalkansäuren.

Erfindungsgemäß verwendbare Beispiele hierfür sind in der US-A-3 412 054 beschrieben. Eine bevorzugte Gruppe von Dihydroxyalkansäuren sind alpha,alpha-Dimethylolalkansäuren der allgemeinen Formel 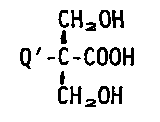 worin Q' Wasserstoff oder C₁-C₈-Alkyl sind. Bevorzugt sind alpha,alpha-Dimethylolpropionsäure und alpha,alpha-Dimethylolbuttersäure.

Weitere Beispiele für verwendbare Dihydroxyalkansäuren sind Dihydroxypropionsäure, Dimethylolessigsäure, Dihydroxybernsteinsäure oder Dihydroxybenzoesäure. Geeignet sind auch die durch Oxydation von Monosacchariden zugänglichen Polyhydroxysäuren, z.B. Glukonsäure, Zuckersäure, Schleimsäure und Glucuronsäure.

Weitere als Komponente a) verwendbare Verbindungen sind aminogruppenhaltige Säuren, beispielsweise alpha,alpha-Diamino-valeriansäure, 3,4-Diaminobenzoesäure, 2,4-Diamino-toluol-sulfonsäure (5) und 4,4-Diamino-di-phenylethersulfonsäure.

Die Komponente a) kann auch hydroxylgruppenhaltige Verbindungen mit nicht-ionischen hydrophilen Gruppen umfassen. Nichtionische hydrophile Gruppen sind beispielsweise Polyetherketten mit eingebauten Ethylenoxideinheiten. Es sind Verbindungen mit einem oder zwei gegenüber Isocyanaten reaktionsfähigen Wasserstoffatomen, die beispielsweise in der Seitenkette Ethylenoxideinheiten aufweisende Polyetherketten tragen oder um Gemische davon. Beispiele für solche Verbindungen sind Polyole, die Polyetherketten mit eingebauten Ethylenoxideinheiten aufweisen.

Als Komponente b) bei der Herstellung der NCO-Gruppen enthaltenden Preaddukte können beliebige organische Diisocyanate eingesetzt werden.

Es kann sich um aliphatische, cycloaliphatische oder aromatische, sowie auch sterisch gehinderte Diisocyanate handeln. Es können beispielsweise auch Ether- oder Estergruppen enthaltende Diisocyanate eingesetzt werden. Beispiele für geeignete Diisocyanate sind Trimethylendiisocyanat, Tetramethylendiisocyanat, Pentamethylendiisocyanat, Hexamethylendiisocyanat, Propylendiisocyanat, Ethylendiisocyanat, 2,3-Dimethylethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylen-diisocyanat, 2,6-Toluylen-diisocyanat, 1-Isocyanatomethyl-5-isocyanat-1,3,3,-trimethylcyclohexan, Bis-(4-isocyanatocyclohexyl)methan, Bis-(4-isocyanato-phenyl)-methan, Norbornandiisocyanat, 4,4-Diisocyanatodiphenylether, 1,5-Dibutylpentamethylendiisocyanat, Tetramethylxylylendiisocyanat, 2,3-bis-(8-isocyanatooctyl)-4-octyl-5-hexylcyclohexan, 3(4)-Isocyanatomethyl-1-methylcyclohexylisocyanat und/oder 2,6-Diisocyanatomethyl-capronat.

Bevorzugt eingesetzt werden nicht vergilbende und/oder sterisch gehinderte Isocyanate, bei denen es sich um solche mit 4 bis 25, vorzugsweise 6 bis 16 C-Atomen, die in alpha-Stellung zur NCO-Gruppe eine oder zwei lineare, verzweigte oder cyclische Alkylgruppen mit 1 bis 12, bevorzugt 1 bis 4 C-Atomen enthalten, handelt. Das Grundgerüst kann aus einem aromatischen oder alicyclischen Ring oder aus einer aliphatischen linearen oder verzweigten C-Kette mit 1 bis 12 C-Atomen bestehen. Beispiele hierfür sind Isophorondiisocyanat, Bis-(4-isocyanatocyclohexyl)methan, 1,1,6,6,-Tetramethylhexamethylendiisocyanat, 1,5-Dibutyl-pentamethylendiisocyanat, 3(4),Isocyanatomethyl-1-methyl-cyclohexyl-isocyanat, p- und m-Tetramethylxylylendiisocyanat und/oder die entsprechenden hydrierten Homologen.

Zur Herstellung der erfindungsgemäßen wäßrigen Polyurethandispersionen werden weiterhin hydroxyfunktionelle fettsäuremodifizierte Polyester (B) eingesetzt.

Die hydroxyfunktionellen fettsäuremodifizierten Polyester haben eine OH-Funktionalität größer 3 und eine OH-Zahl von 150 bis 300, besonders bevorzugt von 180 bis 240 mg KOH/g. Sie haben einen bevorzugten Monofettsäureanteil von 10 bis 50 Gew.-%, bezogen auf den gesamten Polyester.

Bei der Herstellung der hydroxyfunktionellen fettsäuremodifizierten Polyester können als Komponente c) übliche für die Herstellung von Polyestern bekannte Polyalkohole eingesetzt werden. Beispielsweise handelt es sich um aliphatische, cycloaliphatische und/oder araliphatische Polyalkohole mit 1 bis 15, vorzugsweise 1 bis 6 C-Atomen und mit 1 bis 6, vorzugsweise 1 bis 4 an nicht aromatische C-Atome gebundene OH-Gruppen pro Molekül. Beispiele für derartige Polyalkohole sind Glykole wie Ethylenglykol, Propandiol-1,2- und 1,3, Butandiol-1,2, -1,3 und -1,4, 2-Ethylenpropandiol-1,3, Neopentylglykol, 2,2-Trimethylpentandiol-1,2, Hexandiol-1,6, Cyclohexandiol-1,2 und -1,4, 1,2- und 1,4-Bis-(hydroxymethyl)-cyclohexan, Adipinsäure-bis-(ethylenglykolester), Etheralkohole wie Di- und Triethylenglykol, Dipropylenglykol, Dimethylolpropionsäure, oxalkylierte Bisphenole mit zwei C2-C3-Oxalkylgruppen pro Molekül, perhydrierte Bisphenole, Butantriol-1,2,4, Hexantriol-1,2,6, Trimethylolethan, Trimethylolpropan, Trimethylolhexan, Glyzerin, Pentaerythrit, Dipentaerythrit, Sorbit. Bevorzugt eingesetzte Alkohole sind Glyzerin, Trimethylolpropan, Neopentylglykol und Pentaerythrit.

Es können auch anteilsmäßig kettenabbrechende einwertige Alkohole, beispielsweise solche mit 1 bis 8 C-Atomen im Molekül wie Propanol, Butanol, Cyclohexanol, n-Hexanol, Benzylalkohol, Hydroxypivalinsäure eingesetzt werden.

Bei der Herstellung der OH-funktionellen fettsäuremodifizierten Polyester (B) werden als Komponente d) beispielsweise für die Polyesterherstellung übliche Polycarbonsäuren oder deren veresterungsfähige Derivate eingesetzt. Dabei kann es sich um aliphatische, cycloaliphatische und/oder aromatische Dicarbonsäuren mit 4 bis 36 Atomen handeln, die linear oder verzweigt aufgebaut sein können. Vorzugsweise handelt es sich um Dicarbonsäuren mit 4 bis 12 C-Atomen pro Molekül. Beispiele für geeignete Dicarbonsäuren und deren Derivate sind Phthalsäureanhydrid, Isophthalsäure, Terephthalsäure, Terephthalsäuredimethylester, Tetrahydro- und Hexahydrophthalsäureanhydrid, Alkylbernsteinsäureanhydrid, Bernsteinsäure, Glutarsäure, Sebacinsäure, Azelainsäure, Adipinsäure, Cyclohexandicarbonsäure, Norbornandicarbonsäure, Dimerfettsäuren, Pyromellithsäureanhydrid, Fumarsäure, Maleinsäure und deren Anhydride. Bevorzugt werden anteilsweise auch höherfunktionelle Polycarbonsäuren und deren Derivate verwendet um einen verzweigten Polyester zu erhalten. Beispiele für höherfunktionelle Polycarbonsäuren bzw. deren Anhydride sind Trimellithsäure, Trimellithsäureanhydrid, Pyromellithsäure und Pyromellithsäureanhydrid.

Bei der Herstellung der hydroxyfunktionellen fettsäuremodifizierten Polyester kommen als Komponente e) beispielsweise lineare oder verzweigte, aliphatische oder aromatische Monocarbonsäuren mit 6 bis 35 C-Atomen in Frage. Die Monocarbonsäuren können gesättigt oder ungesättigt sein. Beispiele für geeignete gesättigte Monocarbonsäuren sind 2-Ethylhexansäure, Isononansäure, Versaticsäure, Neodecansäure, Dodecansäure, Stearinsäure, Palmitinsäure, Kokosölfettsäure oder hydrierte technische Fettsäuren bzw. Fettsäuregemische. Beispiele für ungesättigte Monocarbonsäuren der entsprechenden Kettenlänge sind Sojaölfettsäure, Ricinusölfettsäure, Sorbinsäure, Erdnußölfettsäure, Tallölfettsäure und Ricininfettsäure. Bevorzugt werden gesättigte aliphatische Fettsäuren eingesetzt.

Die OH-funktionellen fettsäuremodifizierten Polyester (B) können auch in Kombination mit anderen monofettsäurefreien OH-funktionellen linearen Polyestern (C) eingesetzt werden. Bevorzugt sind dabei solche Polyester, die eine niedrigere OH-Zahl als die fettsäuremodifizierten Polyester (B) aufweisen, nämlich OH-Zahlen von 40 bis unter 150 mg KOH/g; ihre durchschnittliche OH-Funktionalität liegt bevorzugt bei 2.

Zur Herstellung der erfindungsgemäßen wäßrigen Polyurethandispersionen werden ebenfalls organische Polyisocyanate (D) eingesetzt, wobei zumindest ein Teil der Polyisocyanate eine funktionelle Gruppe R¹OSi〈̶ aufweist, worin
R¹ = C₁- bis C₈-Alkyl oder -C(O)R² und
R² = C₁- bis C₁₀-Alkyl bedeuten.

Bei den Polyisocyanaten handelt es sich bevorzugt um Diisocyanate. Als Diisocyanate können beliebige organische Diisocyanate eingesetzt werden. Es kann sich um aliphatische, cycloaliphatische oder aromatische, sowie auch sterisch gehinderte Diisocyanate handeln, wie sie vorstehend für die Komponente b) bereits beschrieben wurden.

Erfindungsgemäß handelt es sich bei zumindest einem Teil der bevorzugt einzusetzenden Diisocyanate um mit mindestens einer funktionellen Gruppe R¹OSi〈̶ modifizierte Diisocyanate. Bevorzugt liegen übliche organische Diisocyanate, beispielsweise wie vorstehend für Komponente b) beschrieben, im Gemisch mit R¹OSi〈̶ funktionalisierten Diisocyanaten vor.

Bei den mit mindestens einer Gruppe R¹OSi〈̶ funktionalisierten Diisocyanaten kann es sich beispielsweise um Umsetzungsprodukte aus einem oder mehreren polyfunktionellen Isocyanaten, bevorzugt trifunktionellen Isocyanaten, und einer oder mehreren Verbindungen mit mindestens einer Gruppe R¹OSi〈̶ und mit mindestens einer gegenüber Isocyanatgruppen reaktiven Gruppe handeln. Diese Verbindungen haben beispielsweise die allgemeine Formel

[(H-X-)ₙR]ₐSi(OR¹)_{b}(R³)_{c} (I)

mit X = 0, S, NH oder NR⁴, bevorzugt NH oder NR⁴,
R = ein bifunktioneller, trifunktioneller oder tetrafunktioneller, bevorzugt bifunktioneller organischer Rest mit einem Molekulargewicht von 13 bis 500, bevorzugt Alkylen oder Aralkylen mit 1 bis 12 C-Atomen, besonders bevorzugt Alkylen mit 1 bis 12 C-Atomen,
R¹ = C₁- bis C₈-Alkyl oder C(O)R², bevorzugt C₁- bis C₄-Alkyl,
R² = R³ = C₁- bis C₁₀-Alkyl, wobei R² und R³ gleich oder verschieden sein können,
R⁴ = C₁-C₈-Alkyl,
a = 1, 2 oder 3, bevorzugt 1,
b = 1, 2 oder 3, bevorzugt 2 oder 3,
c = 0, 1 oder 2,
n = 1 bis 3, bevorzugt 1 oder 2, besonders bevorzugt 1,
wobei mehrere Reste R¹, R² und R³ gleich oder verschieden sein können und worin die Summe aus a plus b plus c = 4 ergibt.

Bei den Verbindungen der allgemeinen Formel (I) handelt es sich um Silanderivate, die gegenüber Isocyanatgruppen zur Addition befähigte, aktiven Wasserstoff enthaltende Gruppen vom Typ (H-X-)ₙR- aufweisen. Als aktiven Wasserstoff enthaltende, funktionelle Gruppen HX- sind Amingruppen bevorzugt. n besitzt Werte von 1 bis 3, bevorzugt nimmt n den Wert 1 an. Beim Rest R handelt es sich um einen bifunktionellen bis tetrafunktionellen, bevorzugt bifunktionellen organischen Rest, der chemisch inerte Gruppen oder Substituenten tragen kann, z.B. mit einem Molekulargewicht von 13 bis 500. Bevorzugt handelt es sich beim Rest R um einen bifunktionellen Alkylen- oder Aralkylen mit 1 bis 12 C-Atomen. Ein Alkylenrest mit 1 bis 12 C-Atomen ist als Rest R besonders bevorzugt.

Weiterhin enthält das Silanderivat der allgemeinen Formel (I) 1 bis 3, bevorzugt 2 oder 3 an Silizium gebundene Gruppen -OR¹, wobei R¹ bevorzugt die Bedeutung von C₁- bis C₈-Alkyl besitzt.

Als einige bevorzugte Beispiele für Verbindungen (I) seien beta-Aminoethyltriethoxysilan, gamma-Aminopropyltriethoxysilan, gamma-Aminopropyltrimethoxysilan, gamma-Aminopropylethyldiethoxysilan, gamma-Aminopropylphenyldiethoxysilan, gamma-Aminopropyltrimethoxysilan, delta-Aminobutyltriethoxysilan, delta-Aminobutylethyldiethoxysilan, N-(2-Aminoethyl-3-aminopropyl)trimethoxysilan, N-2-Aminoethyl-3-aminopropyl-tris(2-ethylhexoxy)silan, 6-(Aminohexylaminopropyl)trimethoxysilan, N-Aminoethyl-3-aminopropyl-methyl-dimethoxysilan genannt.

Die Umsetzung der polyfunktionellen, bevorzugt trifunktionellen Isocyanate mit Verbindungen der allgemeinen Formel (I) erfolgt unter vollständigem Verbrauch der HX-Gruppen der Verbindungen I. Bevorzugt werden Isocyanatgruppen und HX-Gruppen stöchiometrisch im Verhältnis 3 : 1 miteinander zur Reaktion gebracht.

Die polyfunktionellen, bevorzugt trifunktionellen Isocyanate können in üblicher Weise aus den Diisocyanaten erhalten werden. Beispielsweise können die entsprechenden Trimerisierungsprodukte der üblichen bereits beschriebenen Diisocyanate oder deren Umsetzungsprodukte mit Wasser oder Polyolen, wie z.B. Trimethylolpropan oder Glycerin, eingesetzt werden.

Eine Ausgestaltungsform der Erfindung besteht darin, daß zumindest ein Teil der silanmodifizierten Diisocyanate zusätzlich mit weiteren monofunktionellen Verbindungen, welche gegenüber Isocyanat reaktionsfähige Gruppen enthalten, modifiziert wird. Diese zusätzlich modifizierten Diisocyanate werden beispielsweise erhalten durch gleichzeitige Umsetzung von polyfunktionellen, bevorzugt trifunktionellen Isocyanaten mit Verbindungen der allgemeinen Formel (I) und weiteren monofunktionellen Verbindungen, welche gegenüber Isocyanat reaktionsfähige Gruppen enthalten.

Beispiele für solche monofunktionellen mit Isocyanat reaktionsfähige Verbindungen sind Verbindungen mit Hydroxylgruppen, primären oder sekundären Aminogruppen und einem (cyclo)aliphatischen linearen oder verzweigten Kohlenwasserstoffrest mit 5 bis 30 C-Atomen, bevorzugt mit 8 bis 18 C-Atomen. Bevorzugt werden langkettige Monofettalkohole oder Monofettamine eingesetzt. Beispiele hierfür sind n-Hexylalkohol, n- oder iso-Octylalkohol, Isononanol, Laurylalkohol, Cetylalkohol, Stearylalkohol, Dodecylalkohol, n-Hexylamin, n-Octylamin, Laurylamin.

Bei der Umsetzung der polyfunktionellen Isocyanate mit Verbindungen der Formel (I) und gegebenenfalls weiteren monofunktionellen Verbindungen, welche gegenüber Isocyanat reaktionsfähige Gruppen enthalten, können anteilsweise auch mit mindestens einer Gruppe R¹OSi〈̶ modifizierte Monoisocyanate erhalten werden.

Die Umsetzung der Komponenten (A), (B), (C) und (D) zum erfindungsgemäßen silanfunktionellen Polyesterurethan erfolgt im wasserfreien Milieu beispielsweise bei Temperaturen von 50 bis 100°C. Es kann lösemittelfrei gearbeitet werden oder es wird in, dem Fachmann an sich geläufigen, für die Polyurethansynthese geeigneten organischen Lösemitteln gearbeitet. Als Lösemittel können wassermischbare Lösemittel oder wasserunmischbare Lösemittel eingesetzt werden. Im allgemeinen ist es vorteilhaft, solche Lösemittel zu verwenden, die in jedem Stadium der Herstellung der erfindungsgemäßen PU-Dispersion (beispielsweise nach deren Fertigstellung) entfernt werden können, beispielsweise durch Abdestillieren gegebenenfalls unter vermindertem Druck.

Beispiele für geeignete Lösemittel sind Ketone, z.B. Aceton, Methylethylketon, Methylisobutylketon; N-Alkylpyrrolidone, wie z.B. N-Methylpyrrolidon; Ether, wie z.B. Diethylenglykoldimethylether, Dipropylglykoldimethylether, oder auch cyclische Harnstoffderivate, wie 1,3-Di-methyl-3,4,5,6-tetrahydro-2(1H)-pyrimidinon.

Die Umsetzung der Komponenten (A), (B), (C) und (D) zum erfindungsgemäßen silanfunktionellen Polyesterurethan kann auf verschiedene Weise erfolgen. Beispielsweise kann so vorgangen werden, daß zunächst ein NCO-Gruppen enthaltendes Preaddukt (A) und ein fettsäuremodifizierter OH-funktioneller Polyester (B) und gegebenenfalls ein linearer Polyester (C) hergestellt werden. Anschließend können die Komponenten (A), (B) und gegebenenfalls (C) miteinander umgesetzt werden. Die Umsetzung erfolgt dabei in einem derartigen Mengenverhältnis, daß die OH-Gruppen der Polyester (B) und (C) im Überschuß gegenüber den NCO-Gruppen des Preadduktes (A) vorliegen. Bevorzugt beträgt das Äquivalentverhältnis OH-Gruppen : NCO-Gruppen 3 : 1 bis 1,1 : 1.

Die Umsetzung der NCO-Gruppen enthaltenden Preaddukte (A) mit den hydroxyfunktionellen Polyestern (B) und (C) kann beispielsweise in der Schmelze oder in wasserfreien organischen Lösemitteln erfolgen, die nicht mit Isocyanatgruppen reagieren. Die Umsetzung kann beispielsweise bei Temperaturen von 60 bis 160°C gegebenenfalls unter Zusatz üblicher basischer und/oder metallischer Katalysatoren erfolgen. Der bei diesem Umsetzungsprozeß entstehende urethangruppenhaltige OH-funktionelle Polyester kann dann mit den organischen, zumindest teilweise mit R₁OSi-Gruppen modifizierten Polyisocyanaten zur Reaktion gebracht werden.

Zur Herstellung der erfindungsgemäßen Polyurethane ist es jedoch beispielsweise auch möglich, die Komponenten (A), (B), gegebenenfalls (C) und (D) gleichzeitig miteinander umzusetzen. Dabei kann gegebenenfalls auch so vorgegangen werden, daß zunächst Komponente (D) aus ihren Einzelkomponenten hergestellt wird und anschließend Komponente (A) und (B), gegebenenfalls (C) zugegeben werden.

Bei der Herstellung der erfindungsgemäßen Polyurethane werden die einzelnen Komponenten in solchen Mengen miteinander zur Reaktion gebracht, daß vom Fachmann gewünschte Bindemittelqualitäten erzielt werden, wie z.B. Wasserdispergierbarkeit, Viskositätsverhalten, Filmbildungseigenschaften, Lagerstabilität. Insgesamt werden die Mengenanteile der einzelnen Komponenten bevorzugt so gewählt und die Reaktion so geführt, daß das Polyurethanharz 1 bis 30, besonders bevorzugt 2 bis 20 mmol Silizium pro 100 g Festharz enthält, bevorzugt ein Zahlenmittel der Molmasse (Mn) von 15000 bis 100000, bevorzugt eine Hydroxylzahl von 30 bis 200, besonders bevorzugt von 50 bis 120 mg KOH/g, bezogen auf Festharz, und bevorzugt einen Gehalt an ionischen, in ionische Gruppen überführbaren und/oder hydrophilen Gruppen von 5 bis 200 mEqu pro 100 g Festharz, sowie bevorzugt eine Säurezahl von 10 bis 40 mg KOH/g aufweist.

Nach Umsetzung der Komponenten (A), (B), (C) und (D) zum Polyurethanharz erfolgt die Überführung des Reaktionsproduktes in eine wäßrige Dispersion unter Zusatz von Wasser und gegebenenfalls Abdestillieren von vorhandenem Lösemittel.

Das Polyurethanharz weist zur Gewährleistung einer ausreichenden Wasserverdünnbarkeit ionische Gruppen, zur Ionenbildung befähigte Gruppen und/oder hydrophile nicht-ionische Gruppen auf. Enthält das Polyurethanharz zur Ionenbildung befähigte Gruppen, so werden diese mit einem Neutralisationsmittel ganz oder teilweise in die entsprechenden Salze überführt. Dies kann an beliebiger Stelle der vorstehend beschriebenen Synthese geschehen. Die Neutralisationsmittel können jedoch auch gemeinsam mit der zur Überführung in die Wasserphase notwendigen Hauptwassermenge zugesetzt werden.

Als ionenbildende Gruppe sind solche bevorzugt, die zur Anionenbildung befähigt sind. Beispiele für solche Gruppen sind vorstehend bei der Synthese des erfindungsgemäßen Polyurethanharzes beschrieben. Zur Umwandlung in Anionen dient dann eine Base, z.B. ein Amin, bevorzugt ein tert.-Amin. Geeignete tertiäre Amine sind z.B. Trialkylamine, wie Trimethylamin, Triethylamin, Triisopropylamin, Tri-n-propylamin und Tri-n-butylamin; N-Alkylmorpholine, wie N-Methylmorpholin und N-Ethylmorpholin; N-Dialkylalkanolamine, wie N-Dimethylethanolamin, N-Diethylethanolamin und N-Dimethylisopropanolamin und Mischungen aus mindestens zwei dieser Verbindungen. Es ist jedoch auch möglich zur Neutralisation anteilsweise ein oder mehrere Polyamine, bevorzugt Diamine mit primären und/oder sekundären Aminogruppen einzusetzen. Beispiele hierfür sind Ethylendiamin, 1,4-Butandiamin, 3-Amino-1-methylaminopropan, 2,2-Dimethyl-1,3-propandiamin, 1,2- und 1,4-Cyclohexandiamin, Isophorondiamin, 4,4'-Diaminodiphenylmethan und Aminoethyl-ethanolamin.

Enthält das erfindungsgemäße Polyurethanharz kationenbildende Gruppen, so werden bevorzugt eine oder mehrere Säuren zur Ionenbildung verwendet. Geeignete Säuren sind z.B. Phospshorsäure oder saure Phosphorsäureester, oder organische Carbonsäuren wie Ameisensäure, Essigsäure, Propionsäure, Acrylsäure, Hydroxycarbonsäuren wie Milchsäure, Dimethylolpropionsäure oder Zitronensäure, oder Dicarbonsäuren wie Malonsäure, Glutarsäure oder Oxalsäure. Es können auch Mischungen der Säuren eingesetzt werden. Es ist aber auch eine Quartärnisierungsreaktion mit Alkylierungsmitteln, wie z.B. die Umsetzung mit Alkylhalogeniden oder Epoxiden möglich.

Das lösemittelfrei oder in organischer Lösung vorliegende gegebenenfalls bereits neutralisierte Polyurethanharz wird durch Zugabe einer ausreichenden Wassermenge in die wäßrige Phase überführt.

Das Herstellen der wäßrigen Polyurethan-Dispersion kann nach bekannten Verfahren erfolgen. Beispielsweise ist es möglich die gegebenenfalls neutralisierten Harze vorzulegen und unter gutem Dispergieren mit Wasser zu versetzen. Ebenso kann die gegebenenfalls Neutralisationsmittel enthaltende Wasserphase vorgelegt und unter Rühren das Harz eingearbeitet werden. Ebenso ist eine kontinuierliche Arbeitsweise möglich, d.h. es werden in bekannten Aggregaten, z.B. einem Rotor-Statormischer oder einem Hochdruckhomogenisator, gleichzeitig Harz, Wasser und Neutralisationsmittel homogen zusammengemischt. Werden die gegebenenfalls neutralisierten Harze vorgelegt, kann die Zugabe der für die Überführung in die Wasserphase notwendigen Wassermenge über einen Zeitraum von 5 Minuten bis 4 Stunden erfolgen. Die Dispersionsbildung kann generell durch erhöhte Temperaturen unterstützt werden.

Die Erfindung betrifft weiterhin wäßrige Überzugsmittel, welche die erfindungsgemäßen Polyurethandispersionen und Polyisocyanate mit freien Isocyanatgruppen enthalten.

Die erfindungsgemäßen Überzugsmittel können neben den erfindungsgemäßen Polyurethanharz-Dispersionen ein oder mehrere weitere Bindemittel enthalten. Dies kann beispielsweise zur Erzielung synergistischer Effekte günstig sein. Beispiele für weitere Bindemittel sind dem Fachmann geläufige übliche filmbildende wasserlösliche oder wasserverdünnbare Harze, wie wasserverdünnbare Polyesterharze, wasserverdünnbare Polyacrylatharze und/oder andersartige wasserverdünnbare Polyurethanharze. Die Menge der zugesetzten Harze kann beispielsweise 0 bis 50 Gew.-% des gesamten Harzfestkörpers betragen. Besonders bevorzugt sind 0 bis 30 Gew.-%. In diesem Zusammenhang bedeutet Harzfestkörper die Summe aller Bindemittel ohne den Vernetzeranteil.

Als Vernetzer sind in den erfindungsgemäßen Überzugsmitteln Polyisocyanate mit freien Isocyanatgruppen enthalten. Bei den Polyisocyanaten handelt es sich um beliebige organische Polyisocyanate mit aliphatisch, cycloaliphatisch, araliphatisch und/oder aromatisch gebundenen freien Isocyanatgruppen. Sie sind bei Raumtemperatur flüssig oder durch Zusatz organischer Lösemittel verflüssigt. Die Polyisocyanate weisen bei 23°C im allgemeinen eine Viskosität von 1 bis 6000 mPa.s, vorzugsweise über 5 und unter 3000 mPa.s auf.

Derartige Polyisocyanate sind allgemein bekannt und z.B. beschrieben in DE-A-38 29 587 oder DE-A-42 26 243.

Bevorzugt handelt es sich bei den Polyisocyanaten um Polyisocyanate oder Polyisocyanatgemische mit ausschließlich aliphatisch und/oder cycloaliphatisch gebundenen Isocyanatgruppen mit einer mittleren NCO-Funktionalität von 1,5 bis 5, bevorzugt 2 bis 3.

Besonders gut geeignet sind beispielsweise "Lackpolyisocyanate" auf Basis von Hexamethylendiisocyanat, 1-Isocyanato-3,3,5-trimethyl-5-isocyanatomethyl-cyclohexan (IPDI), Norbornandiisocyanat und/oder Bis(isocyanatocyclohexyl)-methan und die an sich bekannten Biuret-, Allophanat-, Urethan- und/oder Isocyanuratgruppen aufweisenden Derivate dieser Diisocyanate, die im Anschluß an ihre Herstellung, vorzugsweise durch Destillation vom überschüssigem Ausgangsdiisocyanat bis auf einen Restgehalt von weniger als 0,5 Gew.-% befreit worden sind.

Ebenfalls sehr gut geeignet sind sterisch behinderte Polyisocyanate der allgemeinen Formel 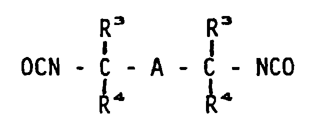 wobei R³= H oder R⁴, R⁴= CₙH₂ₙ₊₁ mit n = 1 bis 6 sind.

Die Substituenten R³ und R⁴ sind entweder linear oder verzweigt, gleich oder ungleich. Das Grundgerüst A kann aus einer einfachen Bindung, einem aromatischen oder alicyclischen Ring oder aus einer aliphatischen linearen oder verzweigten C-Kette mit 1 bis 12 C-Atomen bestehen.

Beispiele hierfür sind 1,1,6,6-Tetramethyl-hexamethylendiisocyanat, 1,5-Dibutyl-pentamethyldiisocyanat, p- oder m-Tetramethylxylylendiisocyanat und die entsprechenden hydrierten Homologen. Diese Diisocyanate können ebenfalls in geeigneter Weise zu höherfunktionellen Verbindungen umgesetzt werden, beispielsweise durch Trimerisierung oder durch Umsetzung mit Wasser oder Trimethylolpropan.

Ebenfalls geeignet, jedoch weniger bevorzugt sind aromatische Polyisocyanate. Beispiele hierfür sind Polyisocyanate auf Basis von 2,4-Diisocyanatotoluol oder dessen Gemische mit 2,6-Diisocyanatotoluol oder auf Basis von 4,4'-Diisocyanatodiphenylmethan sowie deren Trimerisate.

Die erfindungsgemäßen Überzugsmittel können ein oder mehrere farb- und/oder effektgebende Pigmente und gegebenenfalls Füllstoffe enthalten. Als Pigmente und Füllstoffe sind alle lacküblichen Pigmente und Füllstoffe organischer oder anorganischer Natur geeignet. Beispiele für anorganische oder organische farbgebende Pigmente sind Titandioxid, mikronisiertes Titandioxid, Eisenoxidpigmente, Ruß, Zinkphosphat (Korrosionsschutzpigment), Azopigmente, Phthalocyaninpigmente, Chinacridon- oder Pyrrolopyrrolpigmente. Beispiele für effektgebende Pigmente sind Metallpigmente, z.B. aus Aluminium, Kupfer oder anderen Metallen; Interferenzpigmente wie z.B. metalloxidbeschichtete Metallpigmente, z.B. titandioxidbeschichtetes Aluminium, beschichtete Glimmer wie z.B. titandioxidbeschichteter Glimmer und Graphiteffektpigmente. Beispiele für Füllstoffe sind Siliciumdioxid, Bariumsulfat, Talkum, Aluminiumsilikat und Magnesiumsilikat.

Die erfindungsgemäßen Überzugsmittel können weiterhin Additive enthalten. Bei den Additiven handelt es sich um die üblichen auf dem Lacksektor einsetzbaren Additive. Beispiele für solche Additive sind Lichtschutzmittel, z.B. auf Basis von Benztriazolen und HALS-Verbindungen, Verlaufsmittel auf der Basis von (Meth)acryl-Homopolymerisaten oder Silikonöle, rheologiebeeinflussende Mittel, wie hochdisperse Kieselsäure oder polymere Harnstoffverbindungen, Verdicker, wie anvernetzte Polycarbonsäure oder Polyurethane, Antischaummittel, Netzmittel, Härtungsbeschleuniger für die Vernetzungsreaktion der OH-funktionellen Bindemittel mit den Polyisocyanaten, wie z.B. organische Metallsalze, wie Dibutylzinndilaurat, Zinknaphthenat und tertiäre Aminogruppen enthaltende Verbindungen wie Triethylamin. Die Additive werden in üblichen, dem Fachmann geläufigen Mengen eingesetzt. Die Zugabe der Additive kann dabei in üblicher Art und Weise erfolgen oder es kann zumindest ein Teil der Additive zum erfindungsgemäßen Polyurethanharz zugegeben werden, bevor die Überführung des Polyurethanharzes in die wäßrige Phase erfolgt. Im letzteren Fall kann so vorgegangen werden, wie in der noch nicht veröffentlichten deutschen Anmeldung P 196 07 672 der gleichen Anmelderin beschrieben wird.

In erfindungsgemäßen Überzugsmitteln können geringe Mengen organische Lösemittel, bevorzugt nicht mehr als 10 Gew.-%, vorhanden sein. Die organischen Lösemittel sind bevorzugt wassermischbar. Es handelt sich um übliche lacktechnische Lösemittel. Diese können aus der Herstellung der Bindemittel stammen oder werden separat zugegeben. Beispiele für solche Lösemittel sind ein- oder mehrwertige Alkohole, z.B. Propanol, Butanol, Hexanol; Glykolether oder -ester, z.B. Diethylenglykoldialkylether, Dipropylenglykoldialkylether, jeweils mit C1- bis C6-Alkyl, Ethoxypropanol, Butylglykol; Glykole, z.B. Ethylenglykol, Propylenglykol und deren Oligomere, N-Methylpyrrolidon sowie Ketone, z.B. Methylethylketon, Aceton, Cyclohexanon; aromatische oder aliphatische Kohlenwasserstoffe, z.B. Toluol, Xylol oder lineare oder verzweigte aliphatische C6-C12-Kohlenwasserstoffe. Über die Auswahl der Lösemittel können Verlauf und Viskosität des Überzugsmittels beeinflußt werden.

Zur Herstellung pigmentierter Überzugsmittel werden die Einzelbestandteile miteinander vermischt und in üblicher Weise homogenisiert bzw. vermahlen. Beispielsweise kann so vorgegangen werden, daß zunächst ein Teil der erfindungsgemäßen Polyurethanharze mit den Pigmenten und/oder Füllstoffen sowie Lösemitteln und gegebenenfalls lacküblichen Additiven vermischt und in Mahlaggregaten angerieben wird. Danach wird das Mahlgut gegebenenfalls mit der restlichen Bindemittelmenge komplettiert. Es ist jedoch auch möglich, die Pigmente zunächst in einem Pastenharz anzureiben und anschließend mit der erfindungsgemäßen hydroxylgruppenhaltigen Bindemittelkomponente zu komplettieren. Bei den Pastenharzen kann es sich beispielsweise um übliche Pastenharze auf Basis von Polyester-, Polyacrylat- und/oder Polyurethanharzen handeln. Bevorzugt einzusetzende Polyurethanpastenharze sind beispielsweise beschrieben in der EP-A-0 438 090.

Bei den erfindungsgemäßen Überzugsmitteln handelt es sich um sogenannte zweikomponentige Überzugsmittel. D.h., die beiden Komponenten, die Polyisocyanatkomponente und die wäßrige Polyurethandispersion werden getrennt gelagert und erst kurz vor der Applikation miteinander vermischt. Dann kann bei Bedarf mit Wasser oder geringen Mengen an organischen Lösemitteln auf Spritzviskosität eingestellt werden.

Die auf diese Weise hergestellten Überzugsmittel sind besonders geeignet zur Herstellung einer pigmentierten oder transparenten Deckschicht eines lufttrocknenden oder forciert-trocknenden Mehrschichtüberzuges. Sie können jedoch auch für Füller- und/oder Grundierungsschichten sowie als Basislack im Mehrschichtaufbau eingesetzt werden. Sie können auch bei höheren Temperaturen von z.B. 80 bis 150°C gehärtet werden. Sie eignen sich für die Fahrzeug- und Industrielackierung, insbesondere für die Reparaturlackierung von Fahrzeugen und Fahrzeugteilen.

Die Überzugsmittel können nach bekannten Verfahren, wie z.B. Spritzen, Tauchen, Rollen oder Rakeln appliziert werden. Die transparente Klarlackschicht kann beispielsweise nach dem Naß-in-Naß-Verfahren auf konventionelle oder wäßrige Basislacke aufgetragen werden, worauf beide Schichten gemeinsam z.B. 15 bis 30 Minuten bei z.B. 50 bis 150°C, bevorzugt bei 50 bis 80°C gehärtet werden bzw. kann die pigmentierte Decklackschicht oder die Basislackschicht auf übliche 1K- oder 2K-Füllerschichten aufgebracht werden. Die erfindungsgemäßen Überzugsmittel können auch als Füllerschicht beispielsweise auf übliche Grundierungen, z.B. 2K-Epoxidgrundierungen, aufgebracht und bei Raumtemperatur getrocknet werden.

Die Erfindung betrifft daher auch Verfahren zur Herstellung von Mehrschichtüberzügen bzw. die Verwendung der Überzugsmittel zur Herstellung von Mehrschichtüberzügen, wobei die Decklack-, Klarlack-, Basislack- und/oder Füllerschichten von Mehrschichtüberzügen durch die erfindungsgemäßen Überzugsmittel erstellt werden können.

Aus den erfindungsgemäßen wäßrigen Polyurethandispersionen und Polyisocyanaten hergestellte Überzugsmittel zeigen eine hohe Ablaufsicherheit sowohl in pigmentierter als auch in unpigmentierter Form. Die Überzugsmittel ergeben blasenfreie Überzüge auch bei höheren Schichtdicken, beispielsweise von größer 100 µm. Desweiteren zeigen die Überzüge im Vergleich mit bekannten wäßrigen 2K-Systemen verbesserte Chemikalien-, Feuchtraum- und Benzinbeständigkeit.

Die Erfindung soll an den folgenden Beispielen näher erläutert werden.

### Beispiele 1 bis 7

### Herstellung einer Polyurethandispersion

### Beispiel 1

Es werden 255,26 g Aceton, 156,09 g Isophorondiisocyanat und 38,66 g Dimethylolpropionsäure eingewogen. Auf 60°C heizen und solange halten bis eine NCO-Zahl der Lösung von 7,2 % erreicht ist. Auf 50°C kühlen und 729,44 g eines Isononansäure modifizierten, aliphatischen Polyesters (MG = 790 g/mol, OHZ = 235 mg KOH/g), 13,77 g Isophorondiisocyanat und 62,3 g Si-Vorprodukt A (80 %ig in N-Methylpyrrolidon) zugeben und bei 65°C halten, bis die NCO-Zahl der Lösung kleiner 0,2 % beträgt. Anschließend auf 50°C kühlen. Eine Mischung aus 15,5 g Dimethylethanolamin und 4,88 g Isophorondiamin zugeben und 15 Minuten rühren lassen. In 10 Minuten 1446,06 g vollentsalztes Wasser zugeben. Auf 85°C heizen und Aceton abdestillieren.

| **Endwerte:** | |
|---|---|
| Festkörper 1 h 150°C | = 40,0 % |
| Säurezahl über Festkörper | = 18,1 mg KOH/g |
| MEQ-Amin | = 19,9 |
| Hydroxylzahl über Festkörper | = 110 mg KOH/g |
| Viskosität gemessen in DIN-Becher 53211-4 23° C | = 20 Sekunden |

### Beispiel 2

Es werden 1210,96 g Aceton, 754,8 g Isophorondiisocyanat und 196,58 g Dimethylolpropionsäure eingewogen und auf 60°C geheizt. Solange halten, bis eine NCO-Zahl der Lösung von 7,5 % erreicht ist. Auf 50°C kühlen und 347,47 g eines Isononansäure modifizierten, aliphatischen Polyesters (MG = 782 g/mol, OHZ = 236,6 mg KOH/g), 22,2 g Isophorondiisocyanat und 504,3 g Si-Vorprodukt A (80 %ig in N-Methylpyrrolidon) zugeben und bei 65°C halten, bis die NCO-Zahl der Lösung kleiner 0,2 % beträgt. Anschließend auf 50°C kühlen. Eine Mischung aus 73,44 g Dimethylethanolamin, 23,12 g Isophorondiamin und 97,7 g vollentsalztes Wasser zugeben und 15 Minuten rühren lassen. In 10 Minuten 6915,13 g vollentsalztes Wasser zugeben. Auf 85°C heizen und Aceton abdestillieren.

| **Endwerte:** | |
|---|---|
| Festkörper 1 h 150°C | = 39,6 % |
| Säurezahl über Festkörper | = 18,3 mg KOH/g |
| MEQ-Amin | = 21,6 |
| Hydroxylzahl über Festkörper | = 111 mg KOH/g |
| Viskosität gemessen in DIN-Becher 53211-4, 23°C | = 20 Sekunden |

### Beispiel 3

Es werden 1271,54 g Aceton, 754,8 g Isophorondiisocyanat und 186,93 g Dimethylolpropionsäure eingewogen und auf 60°C geheizt. Solange halten, bis eine NCO-Zahl der Lösung von 8,0 % erreicht ist. Auf 50°C kühlen und 352,43 g eines Isononansäure modifizierten, aliphatischen Polyesters (MG = 782 g/mol, OHZ = 236,6 mg KOH/g), 99,9 g Isophorondiisocyanat zugeben. Bei 65°C halten, bis die NCO-Zahl der Lösung kleiner 0,2 % beträgt. Anschließend auf 50°C kühlen. 150,5 g Si-Vorprodukt A (80 %ig in N-Methylpyrrolidon) zusetzen und auf 65°C heizen. Halten, bis eine NCO-Zahl der Lösung kleiner 0,2 % erreicht ist. Kühlen auf 50°C. Zugabe einer Mischung aus 74,58 g Dimethylethanolamin, 23,5 g Isophorondiamin und 90,0 g vollentsalztes Wasser und 15 Minuten rühren lassen. In 10 Minuten 6915,13 g vollentsalztes Wasser zugeben. Auf 85°C heizen und Aceton abdestillieren.

| **Endwerte:** | |
|---|---|
| Festkörper 1 h 150°C | = 40,1 % |
| Säurezahl über Festkörper | = 18,5 mg KOH/g |
| MEQ-Amin | = 22,2 |
| Hydroxylzahl über Festkörper | = 112 mg KOH/g |
| Viskosität gemessen in DIN-Becher 53211-4, 23°C | = 20 Sekunden |

### Beispiel 4

Es werden 251,93 g Aceton, 157,14 g Isophorondiisocyanat und 40,93 g Dimethylolpropionsäure eingewogen und auf 60°C geheizt. Bei 60°C solange halten, bis eine NCO-Zahl der Losung von 7,5 erreicht ist. Auf 50°C kühlen und 723,8 g eines Isononansäure modifizierten, aliphatischen Polyesters (MG = 782 g/mol, OHZ = 236,6 mg KOH/g) und 4,62 g Isophorondiisocyanat zugeben. Bei 65°C halten, bis die NCO-Zahl der Lösung kleiner 0,2 % beträgt. Anschließend auf 50°C kühlen. 105,0 g Si-Vorprodukt A (80 %ig in N-Methylpyrrolidon) zusetzen und auf 65°C heizen. Halten, bis eine NCO-Zahl der Lösung kleiner 0,2 % erreicht ist. Kühlen auf 50°C. Zugabe einer Mischung aus 16,46 g Dimethylethanolamin, 5,18 g Isophorondiamin und 20,34 g vollentsalztes Wasser und 15 Minuten rühren lassen. In 10 Minuten 1447,2 g vollentsalztes Wasser zugeben. Auf 85°C heizen und Aceton abdestillieren.

| **Endwerte:** | |
|---|---|
| Festkörper 1 h 150°C | = 40,0 % |
| Säurezahl über Festkörper | = 18,7 mg KOH/g |
| MEQ-Amin | = 23,0 |
| Hydroxylzahl über Festkörper | = 111 mg KOH/g |
| Viskosität gemessen in DIN-Becher 53211-4, 23°C | = 18 Sekunden |

### Beispiel 5

Es werden 1210,1 g Aceton, 754,8 g Isophorondiisocyanat und 196,58 g Dimethylolpropionsäure eingewogen. Heizen auf 60°C. Bei 60°C solange halten, bis eine NCO-Zahl der Lösung von 7,5 % erreicht ist. Auf 50°C kühlen und 3476,47 g eines Isononansäure modifizierten, aliphatischen Polyesters (MG = 782 g/mol, OHZ = 236,6 mg KOH/g) und 22,2 g Isophorondiisocyanat zugeben. Bei 65°C halten, bis die NCO-Zahl der Lösung kleiner 0,2 beträgt. Anschließend auf 50°C kühlen. Eine Mischung aus 82,94 g Dimethylethanolamin, 76,11 g Isophorondiamin und 97,7 g vollentsalztes Wasser zugeben und 30 Minuten rühren lassen. 504,3 g Si-Vorprodukt A (80 %ig in N-Methylpyrrolidon) zusetzen und auf 65°C heizen. 1 Stunde bei 65°C halten. Kühlen auf 50°C, dann 6951,13 g vollentsalztes Wasser zugeben. Heizen auf 85°C und Aceton abdestillieren.

| **Endwerte:** | |
|---|---|
| Festkörper 1 h 150°C | = 40,6 % |
| Säurezahl über Festkörper | = 18,1 mg KOH/g |
| MEQ-Amin | = 21,3 |
| Hydroxylzahl über Festkörper | = 111 mg KOH/g |
| Viskosität gemessen in DIN-Becher 53211-4, 23°C | = 15 Sekunden |

### Beispiel 6

Es werden 1186 g Aceton, 754,8 g Isophorondiisocyanat und 192,83 g Dimethylolpropionsäure eingewogen. Auf 60°C heizen und solange halten, bis eine NCO-Zahl der Lösung von 7,7 % erreicht ist. Auf 50°C kühlen und 3263,64 g eines Isononansäure modifizierten, aliphatischen Polyesters (MG = 782 g/mol, OHZ = 236,6 mg KOH/g), 22,2 g Isophorondiisocyanat zugeben und bei 65°C halten, bis die NCO-Zahl der Lösung kleiner 0,2 % beträgt. Anschließend auf 50°C kühlen. 624,66 g Si-Vorprodukt B (80 %ig in N-Methylpyrrolidon) zugeben und bei 65°C umsetzen, bis eine NCO-Zahl der Lösung kleiner 0,2 % erreicht ist. Auf 50°C kühlen. Anschließend eine Mischung aus 72,1 g Dimethylethanolamin, 22,7 g Isophorondiamin und 94,83 g vollentsalztes Wasser zugeben und 15 Minuten rühren lassen. In 10 Minuten 6803,2 g vollentsalztes Wasser zugeben. Heizen auf 85°C und Aceton abdestillieren.

| **Endwerte:** | |
|---|---|
| Festkörper 1 h 150°C | = 40,0 % |
| Säurezahl über Festkörper | = 18,0 mg KOH/g |
| MEQ-Amin | = 22,8 |
| Hydroxylzahl über Festkörper | = 102 mg KOH/g |

### Beispiel 7

Es werden 1125,68 g Aceton, 754,88 g Isophorondiisocyanat und 180,9 g Dimethylolpropionsäure in einen Reaktionskolben eingewogen. Auf 60°C heizen und solange halten, bis eine NCO-Zahl der Lösung von 8,4 % erreicht ist. Auf 50°C kühlen. 3433,8 g eines Isononansäure modifizierten, aliphatischen Polyesters (MG = 7712 g/mol, OHZ = 240 mg KOH/g) und 133,2 g Isophorondiisocyanat zugeben und bei 65°C halten, bis die NCO-Zahl der Lösung kleiner 0,2 % beträgt. Anschließend auf 50°C kühlen. Zugabe von 830,6 g Si-Vorprodukt C (80 %ig in N-Methylpyrrolidon). Erwärmen auf 65°C und dabei halten, bis eine NCO-Zahl der Lösung kleiner 0,2 % erreicht ist. Auf 50°C kühlen. Anschließend eine Mischung aus 68,37 g Dimethylethanolamin, 21,56 g Isophorondiamin und 89,93 g vollentsalztes Wasser zugeben und 15 Minuten rühren lassen. In 10 Minuten 7162,52 g vollentsalztes Wasser zugeben. Heizen auf 85°C und Aceton abdestillieren.

| **Endwerte:** | |
|---|---|
| Festkörper 1 h 150°C | = 40,0 % |
| Hydroxylzahl über Festkörper | = 87 mg KOH/g |

### Herstellung von Si-enthaltenden Vorprodukten

### Si-Vorprodukt A

Es werden 573 g trimerisiertes Hexamethylendiisocyanat eingewogen und auf 60°C geheizt. Anschließend 97,15 g Dodekanol (96 %ig) zugegeben. Auf 80°C heizen und solange halten, bis die NCO-Zahl 15,7 % beträgt. Kühlen auf 60°C und 110,5 g Aminopropyltriethoxysilan in 10 Minuten zutropfen lassen und auf 80°C heizen. Solange bei Tempertur halten, bis eine NCO-Zahl von 10,8 % erreicht ist. Mit 195,2 g N-Methylpyrrolidon verdünnen.

| **Endwerte:** | |
|---|---|
| Festkörper 30 Minuten 125°C | = 77,4 % |
| NCO-Zahl der Lösung | = 8,4 % |

### Si-Vorprodukt B

Es werden 732 g Tetramethylxylylendiisocyanat, 92,0 g Glycerin und 0,824 g Dibutylzinndilaurat eingewogen. Auf 80°C heizen und solange halten, bis eine NCO-Zahl von 15,3 % erreicht ist. Anschließend 206,0 g N-Methylpyrrolidon zusetzen und auf 60°C kühlen. 97,15 g Dodekanol (96 %ig) zugeben. Auf 80°C heizen und solange halten, bis die NCO-Zahl der Lösung 11,2 % beträgt. Kühlen auf 60°C und 110,5 g Aminopropyltriethoxysilan in 10 Minuten zutropfen lassen und bei 80°C umsetzen, bis die NCO-Zahl 6,5 % beträgt. Anschließend 51,06 g N-Methylpyrrolidon zugeben und homogenisieren lassen.

| **Endwerte:** | |
|---|---|
| Festkörper 30 Minuten 125°C | = 81,0 % |
| NCO-Zahl der Lösung | = 6,1 % |

### Si-Vorprodukt C

Es werden 222 g Isophorondiisocyanat eingewogen und auf 80°C geheizt. Anschließend 221 g Aminopropyltriethoxysilan zutropfen lassen. Auf 80°C heizen und solange halten, bis die NCO-Zahl 9,5 % beträgt. Mit 88,6 g N-Methylpyrrolidon verdünnen.

| **Endwerte:** | |
|---|---|
| Festkörper 30 Minuten 125°C | = 80 % |
| NCO-Zahl der Lösung | = 7,6 % |

### Beispiel 8

### Herstellung von Klarlacken (T bedeutet Gewichtsteile)

### Herstellung der Stammkomponenten 8.1 bis 8.7

In jeweils 500 T der in den Beispielen 1 bis 7 erhaltenen Dispersionen werden die folgenden handelsüblichen Lackadditive in der angegebenen Reihenfolge homogen eingearbeitet: 12 T Butylglykol, 1,9 T einer Lichtschutzmittelkombination aus UV-Absorber vom Benzotriazol-Typ und Radikalfänger vom HALS-Typ (HALS = hindered amine light stabilizer), 0,56 T eines Polyurethan-Verdickers und 0,74 T eines Verlaufsmittels auf Polysiloxan-Basis. Mit entionisiertem Wasser wird ein Festkörpergehalt von 40 Gew.-% eingestellt.

In jeweils 100 T der vorstehend hergestellten Stammkomponenten 8.1 bis 8.7 werden 19 T eines handelsüblichen Polyisocyanates auf Basis eines Hexamethylendiisocyanat-Trimers (NCO-Zahl: 17 %) homogen eingerührt. Anschließend wird mit entionisiertem Wasser eine Viskosität von 20 Sekunden (DIN-4-Becher/23°C) eingestellt.

### Beispiel 9 (Vergleichsbeispiel)

### 9.1 Herstellung eines Vergleichs-Bindemittels 1

Es wird ein Vergleichsbindemittel entsprechend WO-A-94/03512, Beispiel 4 hergestellt.

### 9.2 Herstellung eines Vergleichs-Bindemittels 2

Es wird ein Vergleichsbindemittel entsprechend DE-A-44 13 562, Beispiel 1 hergestellt.

### 10. Herstellung von Vergleichsklarlacken 10.1 und 10.2

In 500 T der unter 9.1 und 9.2 erhaltenen Dispersionen werden die folgenden handelsüblichen Lackadditive in der angegebenen Reihenfolge homogen eingearbeitet: 13 T Butylglykol, 2 T einer Lichtschutzmittelkombination aus UV-Absorber vom Benzotriazol-Typ und Radikalfänger vom HALS-Typ (HALS = hindered amine light stabilizer), 0,6 T eines Polyurethan-Verdickers und 0,8 T eines Verlaufsmittels auf Polysiloxan-Basis. Mit entionisiertem Wasser wird ein Festkörpergehalt von 40 Gew.-% eingestellt.

In jeweils 100 T der vorstehend hergestellten Stammkomponenten 10.1 und 10.2 werden 19 T eines handelsüblichen Polyisocyanates auf Basis eines Hexamethylendiisocyanat-Trimers (NCO-Zahl: 17 %) homogen eingerührt. Anschließend wird mit entionisiertem Wasser eine Viskosität von 20 Sekunden (DIN-4-Becher/23°C) eingestellt.

### Applikation der Klarlacke aus den Beispielen 8.1 bis 8.7 und 10.1 und 10.2

Die erhaltenen Klarlacke werden durch Spritzauftrag in einer Trockenschichtdicke von 40 bis 60 µm im Naß-in-Naß-Verfahren auf übliche lösemittelbasierende Basislackschichten aufgebracht und nach einer Ablüftphase von 5 Minuten 30 Minuten bei 60°C gehärtet. Die lacktechnischen Ergebnisse sind in der folgenden Tabelle dargestellt.

| | Läufergrenze bei | Blasenfreiheit ab |
|---|---|---|
| Beispiel 8.1 | 120 µm | 110 µm |
| Beispiel 8.2 | 100 µm | 90 µm |
| Beispiel 8.3 | 110 µm | 90 µm |
| Beispiel 8.4 | 110 µm | 100 µm |
| Beispiel 8.5 | 100 µm | 90 µm |
| Beispiel 8.6 | 120 µm | 100 µm |
| Beispiel 8.7 | 120 µm | 110 µm |
| Vgl.-Beispiel 10.1 | 50 µm | 70 µm |
| Vergleichs-Bsp.10.2 | 40 µm | 80 µm |

Mit den erfindungsgemäßen Überzugsmitteln werden Läufergrenzen von 100 bis 120 µm und blasenfreie Überzüge von 90 bis 110 µm erreicht. Das stellt eine deutliche Verbesserung gegenüber vergleichbaren herkömmlichen Überzugsmitteln dar. Bezüglich Feuchtraumbeständigkeit und Zwischenschichthaftung werden mit den erfindungsgemäßen Überzugsmitteln gleich gute Ergebnisse wie mit herkömmlichen Überzugsmitteln erzielt.

## Patentansprüche

1. Wäßrige Dispersion von silanfunktionellen Polyurethanharzen mit einem Zahlenmittel der Molmasse (Mn) von 10000 bis 500000 und einem Siliziumgehalt, berechnet als elementares Silizium, von 1 bis 30 mmol pro 100 g Harzfestkörper, wobei die wäßrigen Polyurethandispersionen erhältlich sind durch Umsetzung von
(A) NCO-Gruppen enthaltenden Addukten, welche erhältlich sind durch Umsetzung von
a) einer oder mehreren Verbindungen mit mindestens einer ionischen oder zur Ionenbildung fähigen und/oder hydrophilen nicht-ionischen Gruppe und mehr als einer mit Isocyanat reaktionsfähigen Gruppe mit
b) einem oder mehreren organischen Diisocyanaten,
(B) mit einem oder mehreren Polyestern mit einer OH-Zahl von 150 bis 300 mg KOH/g und mehr als drei OH-Gruppen pro Molekül, welche erhältlich sind durch Reaktion von
c) einem oder mehreren Polyalkoholen, mit
d) einer oder mehreren Polycarbonsäuren und
e) einer oder mehreren Monofettsäuren
(C) gegebenenfalls mit einem oder mehreren linearen Polyestern mit einer OH-Zahl von 40 bis unter 150 mg KOH/g, die frei von Monofettsäuren sind, und
(D) mit einem oder mehreren organischen Polyisocyanaten, wobei zumindest ein Teil der Polyisocyanate mindestens eine funktionelle Gruppe R¹OSi〈̶ aufweist und gegebenenfalls mit einem oder mehreren Monoisocyanaten mit mindestens einer funktionellen Gruppe R¹OSi〈̶, worin
R¹ = C₁ bis C₈-Alkyl oder -C(O)R² und
R² = C₁ bis C₁₀-Alkyl bedeuten,
und Überführung des gegebenenfalls neutralisierten Reaktionsproduktes in eine wäßrige Dispersion unter Zusatz von Wasser.

2. Verfahren zur Herstellung der Dispersionen nach Anspruch 1, dadurch gekennzeichnet, daß man
(A) NCO-Gruppen enthaltende Addukte herstellt durch Umsetzung in wasserfreiem Milieu von
a) einer oder mehreren Verbindungen mit mindestens einer ionischen oder zur Ionenbildung fähigen und/oder hydrophilen nicht-ionischen Gruppe und mehr als einer, bevorzugt zwei, mit Isocyanat reaktionsfähigen Gruppen mit
b) einem oder mehreren organischen Diisocyanaten,
und die so erhaltenen Addukte umsetzt mit
(B) einem oder mehreren Polyestern mit einer OH-Zahl von 150 bis 300 mg KOH/g und mehr als drei OH-Gruppen pro Molekül, welche erhältlich sind durch Reaktion von
c) einem oder mehreren Polyalkoholen, mit
d) einer oder mehreren Polycarbonsäuren und
e) einer oder mehreren Monofettsäuren
(C) gegebenenfalls mit einem oder mehreren linearen Polyestern mit einer OH-Zahl von 40 bis unter 150 mg KOH/g, die frei von Monofettsäuren sind, und
(D) mit einem oder mehreren organischen Polyisocyanaten, wobei zumindest ein Teil der Polyisocyanate mindestens eine funktionelle Gruppe R¹OSi〈̶ aufweist und gegebenenfalls mit einem oder mehreren Monoisocyanaten mit mindestens einer funktionellen Gruppe R¹OSi〈̶, worin
R¹ = C₁ bis C₈-Alkyl oder -C(O)R² und
R² = C₁ bis C₁₀-Alkyl bedeuten,
worauf das gegebenenfalls neutralisierte Reaktionsprodukt durch Zusatz von Wasser in eine wäßrige Dispersion überführt wird.

3. Verfahren nach Anspruch 2, dadurch gekennzeichnet, daß die Mengenanteile der Reaktionskomponenten so gewählt werden, daß die Polyurethanharze eine OH-Zahl von 30 bis 200 mg KOH/g, einen Gehalt an ionischen Gruppen, in ionische Gruppen überführbaren Gruppen und/oder nicht-ionische bzw. nicht in ionische Gruppen überführbaren hydrophilen Gruppen von 5 bis 200 mEqu pro 100 g Festharz und eine Säurezahl von 10 bis 40 mg KOH/g aufweisen.

4. Dispersion und Verfahren nach Anspruch 1, 2 oder 3, dadurch gekennzeichnet, daß mit mindestens einer Gruppe R¹OSi〈̶ funktionalisierte Diisocyanate der Komponente D) Umsetzungsprodukte sind aus einem oder mehreren polyfunktionellen Isocyanaten, und einer oder mehreren Verbindungen mit mindestens einer Gruppe R¹OSi〈̶ und mit mindestens einer gegenüber Isocyanatgruppen reaktiven Gruppe mit der allgemeinen Formel
[(H-X-)ₙR]ₐSi(OR¹)_{b}(R³)_{c} (I)
worin bedeuten: X = O, S, NH oder NR⁴,
R = ein bifunktioneller, trifunktioneller oder tetrafunktioneller, organischer Rest mit einem Molekulargewicht von 13 bis 500,
R¹ = C₁- bis C₈-Alkyl oder C(O)R^{²},
R² = R³ = C₁- bis C₁₀-Alkyl, wobei R² und R³ gleich oder verschieden sein können,
R⁴ = C₁-C₈-Alkyl,
a = 1, 2 oder 3,
b = 1, 2 oder 3,
c = 0, 1 oder 2,
n = 1 bis 3,
wobei mehrere Reste R¹, R² und R³ gleich oder verschieden sein können und worin die Summe aus a plus b plus c = 4 ergibt.

5. Dispersion und Verfahren nach Anspruch 1, 2, 3 oder 4, dadurch gekennzeichnet, daß der Polyester (B) eine OH-Zahl von 180 bis 240 mg KOH/g und einen Monofettsäuregehalt von 10 bis 50 Gew.-%, bezogen auf den Polyester, aufweist.

6. Wäßriges Überzugsmittel enthaltend eine wäßrige Dispersion gemäß Anspruch 1, 4 oder 5 oder erhältlich gemäß Anspruch 2 oder 3, gegebenenfalls mit einem oder mehreren Lösungsmitteln und/oder lacküblichen Additiven.

7. Überzugsmittel nach Anspruch 6, das ein oder mehrere Polyisocyanate mit freien NCO-Gruppen als Vernetzer enthält.

8. Verwendung der wäßrigen Polyurethanharzdispersionen nach Anspruch 1, 4 oder 5 oder erhältlich gemäß Anspruch 2 oder 3, in wäßrigen Überzugsmitteln.

9. Verwendung der wäßrigen Überzugsmittel nach einem der Ansprüche 6 und 7 als pigmentierte oder transparente Decklacke in Mehrschichtlackierungen.

10. Verwendung von wäßrigen Überzugsmittel nach einem der Ansprüche 6 oder 7 für die Serienlackierung und die Reparaturlackierung industrieller Gegenstände, sowie von Kraftfahrzeugen und deren Teilen.
